# EUROPÄISCHE PATENTANMELDUNG

(11) **EP 3 373 419 A1**
(43) Veröffentlichungstag der Anmeldung: **12.09.2018**
(21) Anmeldenummer: 17160212.1
(22) Anmeldetag: 09.03.2017
(51) Int. Cl.: H02K 1/04, B32B 7/12, B32B 15/04, B32B 27/16, B32B 37/12, H01F 3/02, H01F 41/02, H02K 15/02

(54) **VORRICHTUNG UND VERFAHREN ZUM VERBINDEN VON BLECHTEILEN ZU EINEM BLECHPAKET**

(71) Anmelder: voestalpine Automotive Components Deutschland GmbH, 72581 Dettingen an der Erms (DE)
(72) Erfinder: Kauffmann, Jochen, 73061 Ebersbach (DE); Bursy, Heinrich, 73268 Erkenbrechtsweiler (DE)
(74) Vertreter: Jell, Friedrich

(57) **Zusammenfassung**

Es wird eine Vorrichtung (1) und ein Verfahren zum Verbinden von Blechteilen (2) zu einem Blechpaket (3) gezeigt, bei dem Blechteile (2) von einem, an zumindest einer seiner Flachseiten (6, 7) mit einer Schmelzklebelackschicht (8, 9) beschichtetem Elektroband (5) freigestanzt werden, die freigestanzten Blechteile (2) gestapelt und zu mehreren Blechpaketen (3) durch thermische Aktivierung der Schmelzklebelackschicht (8, 9) stoffschlüssig verbunden werden, wobei vor dem Freistanzen der Blechteile (2) das Elektroband (5) in einem Teilbereich (23, 43) der Schmelzklebelackschicht (8, 9) derart vorbereitet wird, dass nach einem Freistanzen des Blechteils (2), aufweisend diesen vorbereiteten Teilbereich (23, 43), dieses Blechteil (2) die Trennung der gestapelten Blechteile (2) in Blechpakete (3) erleichtert. Um die Trennung der stoffschlüssig verbundenen Blechteile in Blechpakete einfach und genau zu erreichen, wird vorgeschlagen, dass bei der Vorbereitung des Elektrobands (5) die Schmelzklebelackschicht (8, 9) am Elektroband (5) in ihrer Schichtdicke (29, 49) durch Abtragen mit Laserlicht (20, 40) zumindest verringert wird, um den Teilbereich (23, 43) zu erzeugen.

## Beschreibung

Die Erfindung betrifft eine Vorrichtung und ein Verfahren zum Verbinden von Blechteilen zu einem Blechpaket, bei dem Blechteile von einem, an zumindest einer seiner Flachseiten mit einer Schmelzklebelackschicht beschichtetem Elektroband freigestanzt werden, die freigestanzten Blechteile gestapelt und zu mehreren Blechpaketen durch thermische Aktivierung der Schmelzklebelackschicht stoffschlüssig verbunden werden, wobei vor dem Freistanzen der Blechteile das Elektroband in einem Teilbereich der Schmelzklebelackschicht derart vorbereitet wird, dass nach einem Freistanzen des Blechteils, aufweisend diesen vorbereiteten Teilbereich, dieses Blechteil die Trennung der gestapelten Blechteile in Blechpakete erleichtert.

Um die beim Stanzpaketieren vor- oder selbst endverklebter Blechteile in Blechpakete auftrennen zu können, ist es aus dem Stand der Technik bekannt (WO2014/089593A1), zur Erleichterung der Trennung gestapelter Blechteile in Blechpakete vor dem Folgestanzwerkzeug eine Trennfolie auf das Elektroband bereichsweise aufzulaminieren. Damit wird vor dem Freistanzen der Blechteile das Elektroband in einem Teilbereich der Schmelzklebelackschicht derart vorbereitet, dass nach einem Freistanzen des Blechteils mit diesem vorbereiteten Teilbereich eine stoffschlüssige Verbindung mit einem anschließenden Blechteil nicht eintreten kann.
Bei der Applizierung der Trennfolie bedarf es einer sehr exakten Positionierung in Hinblick auf jenes abzutrennende Blechteil, das als Ende oder Anfang eines Blechpakets die Teilung der Blechpakete in der Paketbremse markiert. Um formgenaue Blechpakete zu erhalten ist solch ein Verfahren vergleichsweise aufwändig - bzw. kann eine hohe Reproduzierbarkeit nicht erreicht werden.

Die Erfindung hat sich daher die Aufgabe gestellt, ein Verfahren der eingangs geschilderten Art derart zu verbessern, dass eine Trennung der stoffschlüssig verbundenen Blechteile in Blechpakete verfahrenstechnisch einfach und reproduzierbar erreicht werden kann.

Die Erfindung löst die gestellte Aufgabe hinsichtlich des Verfahrens dadurch, dass bei der Vorbereitung des Elektrobands die Schmelzklebelackschicht am Elektroband in ihrer Schichtdicke durch Abtragen mit Laserlicht zumindest verringert wird, um den Teilbereich zu erzeugen.

Wird bei der Vorbereitung des Elektrobands die Schmelzklebelackschicht am Elektroband in ihrer Schichtdicke durch Abtragen mit Laserlicht verringert, um den Teilbereich zu erzeugen, so kann zunächst eine verfahrenstechnisch einfache Lösung zur Erleichterung der Trennung der freigestanzten und zusammengefügten Blechteile in Blechpakete vorgegeben werden.
Erfindungsgemäß wird so besonders vorteilhaft erreicht, dass nach einem Freistanzen des Blechteils, aufweisend diesen vorbereiteten Teilbereich, dieses Blechteil (2) die Trennung der gestapelten Blechteile in Blechpakete erleichtert. Durch das Abtragen der Schmelzklebelackschicht kann nämlich mit einer verminderten oder fehlenden Haftwirkung zwischen den angrenzenden Blechteilen gerechnet werden - was als eine Art Soll-Bruchstelle das Trennen der Blechteilte in exakte Blechpakete sicherstellten kann. So ist unter anderem die Zuverlässigkeit des Verfahrens erhöhbar. Im Allgemeinen wird erwähnt, dass die Schmelzklebelacksicht in ihrer Schichtdicke teilweise oder vollständig abgetragen - also entweder lediglich verringert oder völlig entfernt - werden kann.
Außerdem kann sich eine solche Vorbereitung des Elektrobands mit Laserlicht hinsichtlich der Reproduzierbarkeit auszeichnen, weil dieses Abtragen beispielsweise durch steuerungs- bzw. regelungstechnische Maßnahmen den engen Toleranzanforderungen des Freistanzens folgen kann. Ein reproduzierbares Trennen der stoffschlüssig verbundenen Blechteile in Blechpakete kann damit ermöglicht werden - was eine hohe Formgenauigkeit der Blechpakete sicherstellt.
Derartige Blechpakete, insbesondere Elektroblechpakete, sind daher für elektrische Maschinen bzw. elektrische oder elektromagnetische Anwendungen besonders gut geeignet.

Im Allgemeinen wird erwähnt, dass es sich beim Elektroband um ein Halbzeug aus Stahl handeln kann, was beispielswiese ein kaltgewalztes, nicht kornorientiertes Elektroband im schlussgeglühten Zustand (DIN EN10106) oder ein kornorientiertes Elektroband im schlussgeglühten Zustand (DIN EN10107) sein kann.
Zudem wird im Allgemeinen erwähnt, dass unter Laserlicht die Strahlung eines oder mehrerer Laser verstanden wird. Dabei können beispielsweise CO2-Laser, oder Ähnliches zum Einsatz kommen.
Im Allgemeinen wird zudem festgehalten, dass das Elektroband an einer oder an beiden seiner Flachseiten mit einer Schmelzklebstoffschicht, also einer aushärtbaren, polymeren Klebstoffschicht beschichtet ist, um das stoffschlüssige Verbinden der Blechteile zu formstabilen Blechpaketen zu unterstützen. Als Schmelzklebstoffschicht kann sich bevorzugt eine, insbesondere heißhärtende, Backlackschicht eignen. Die zum Einsatz kommenden Laser können dabei sowohl an der oberen Flachseite als auch an der unteren Flachseite, oder an beiden Flachseiten des Elektrobands angeordnet sein.

Wird im Teilbereich die Schmelzklebelackschicht bis zu einer Restschichtdicke abgetragen, so ist die Reproduzierbarkeit des Verfahrens weiter erhöhbar. Derart kann nämlich durch die am Elektroband bzw. am freigestanzten Blechteil verbleibende Restschichtdicke eine Schutzschicht über dem Blechmaterial sicherstellen, um das Blechpaket beispielsweise gegenüber Korrosion zu schützen. Zudem ist es möglich, beim Abtrag der Schmelzklebelackschicht bis zur Restschichtdicke bereits eine ausreichende Reduktion der Klebeeigenschaften zu erreichen, um ein einfaches Trennen der stoffschlüssig verbundenen Blechteile in Blechpakete zu ermöglichen.

Durch die Kombination dieser Vorteile kann sich Laserlicht als äußerst vorteilhaft herausstellen.

In Bezug auf die vorstehende genannten Vorteile kann sich insbesondere auszeichnen, wenn die Schmelzklebelackschicht bis zu einer Restschichtdicke von zumindest 1 µm, insbesondere von zumindest 1,5 µm, abgetragen wird.

Das Verfahren kann zudem in seiner Reproduzierbarkeit verbessert werden, wenn im Teilbereich die Schmelzklebelackschicht durch Laserlicht thermisch aktiviert wird. Während dem Abtragen der Schmelzklebelackschicht kann sich so etwa die Schmelzklebelackschicht über ihre Restschichtdicke erwärmen und somit die Schmelzklebstoffschicht thermisch aktivieren bzw. aushärten. Damit ist es möglich, das Klebevermögen der Schmelzklebelackschicht zu verringern oder dieses zu deaktivieren, um eine sichere Trennung aneinander anschließender Blechteile in Blechpakete zu ermöglichen.

Werden die Schmelzklebelackschichten des an beiden gegenüberliegenden Flachseiten jeweils mit einer Schmelzklebelackschicht beschichteten Elektrobands mit Laserlicht zumindest teilweise in ihrer jeweiligen Schichtdicke abgetragen, um Teilbereiche an der unteren und oberen Flachseite des Elektrobands zu erzeugen, so kann unter anderem der Verfahrensablauf beschleunigt werden. Auch ist das Verfahren in seiner Reproduzierbarkeit verbesserbar, da derart bei einem beidseitig mit Schmelzklebelack beschichteten Elektroband beide in zwei aneinander angrenzenden Blechpaketen einander zugewandte Schmelzklebelackschichten jeweils entsprechend entfernt werden können, um eine einfache Trennung der Blechpakete zu ermöglichen. Der Abtrag der Schmelzklebelackschicht an den gegenüberliegenden Flachseiten kann dabei wechselseitig derart erfolgen, dass nach dem Freistanzen jeweils zwei Blechteile mit ihren zumindest teilweise abgetragenen Schmelzklebelackschichten aneinander anschließen.
Im Allgemeinen wird festgehalten, dass der Abtrag der Schmelzklebelackschicht an der unteren und oberen Flachseite des Elektrobands simultan stattfinden kann.

Sind die unteren Teilbereiche in Vorschubrichtung des Elektrobands gegenüber den oberen Teilbereichen der Flachseite des Elektrobands versetzt angeordnet, ist es auf einfache Weise möglich, dass Blechteile nach dem Freistanzen in der Stapeleinrichtung mit ihren abgetragenen Teilbereichen einander zugewandt gestapelt werden können. Dadurch kann eine besonders einfache spätere Trennung in Blechpakete erfolgen und somit ein zuverlässigeres Verfahren geschaffen werden.

Diese Vorteile, insbesondere hinsichtlich der Reproduzierbarkeit, können erfindungsgemäß selbst dann hoch gehalten werden, wenn die Blechteile aus dem Elektroband folgegestanzt werden - erfindungsgemäß spielt unter anderem die aufwändige Positionierung eines Trennmittels des Stands der Technik keine Rolle mehr.

Wird das Blechteil im abgetragenen Teilbereich der Schmelzklebelackschicht freigestanzt, können sich folglich hohe Passgenauigkeiten der abgetragenen Teilbereiche an den freigestanzten Blechteilen ergeben. Ein besonders zuverlässiges Verfahren ist demnach herstellbar.

Durch verfahrenstechnische Einfachheit kann sich das erfindungsgemäße Verfahren auszeichnen, wenn das Laserlicht, insbesondere oszillierend, in Querrichtung zur Vorschubrichtung des Elektrobands abgelenkt wird. In Verbindung mit dem Vorschub des Blechbands kann der Abtrag der Schmelzklebelackschicht in allen Richtungen des Elektroband zu ermöglicht werden.

Die Erfindung hat sich außerdem die Aufgabe gestellt, eine Vorrichtung zum Verbinden von Blechteilen zu einem Blechpaket derart konstruktiv zu verändern, dass die Trennung der stoffschlüssig verbundenen Blechteile in Blechpakete standfest erfolgen kann, um formgenaue Blechpakete herzustellen. Zudem soll die Vorrichtung konstruktiv einfach ausgestaltet sein.

Die Erfindung löst die gestellte Aufgabe hinsichtlich der Vorrichtung dadurch, dass die Einrichtung vor der Stanzstufe zumindest einen Laser mit einer Ablenkeinrichtung zur zumindest Verringerung der Schichtdicke der Schmelzklebelackschicht im Teilbereich durch Abtragen mit Laserlicht des Lasers aufweist.

Indem die Einrichtung vor der Stanzstufe zumindest einen Laser mit einer Ablenkeinrichtung zur zumindest Verringerung der Schichtdicke der Schmelzklebelackschicht im Teilbereich durch Abtragen mit Laserlicht des Lasers aufweist, kann bereits vor der Stanzstufe ein exakter, bereichsweiser Abtrag der Schmelzklebelackschicht vorgenommen werden, wodurch stets eine formgenaue und einfache Trennung der gestapelten Blechteile zu maßgenauen Blechpaketen erfolgen kann. Eine besonders standfeste und konstruktiv einfache Vorrichtung kann sich auf diese Weise ergeben. Wie bereits erwähnt, ist es vorstellbar, dass die Schmelzklebelacksicht in ihrer Schichtdicke teilweise oder vollständig abgetragen - also entweder lediglich verringert oder völlig entfernt - wird. Eine am Elektroband bzw. am freigestanzten Blechteil verbleibende Restschichtdicke kann die erwähnte Schutzschicht über dem Blechmaterial sicherstellen, etwa um das Blechpaket gegenüber Korrosion zu schützen.
Im Allgemeinen wird festgehalten, dass bei beidseitig mit einer Schmelzklebelackschicht beschichteten Elektrobändern jeweils zumindest ein Laser mit je einer Ablenkeinrichtung an jeder Flachseite des Elektrobands vorgesehen sein kann. Ein unabhängiger Abtrag der Schmelzklebelackschichten an beiden Flachseiten des Elektrobands wird somit ermöglicht.

In den Figuren ist beispielsweise der Erfindungsgegenstand anhand einer Ausführungsvariante dargestellt. Es zeigen
- Fig. 1: eine schematische Ansicht auf eine Vorrichtung zur Blechpaketierung,
- Fig. 2: eine Draufsicht auf das Folgestanzwerkzeug der Vorrichtung nach Fig. 1,
- Fig. 3: eine abgerissene Detailansicht zur Paketbremse der Fig. 1 und
- Fig. 4: eine abgerissene Querschnittsansicht des Elektrobands.

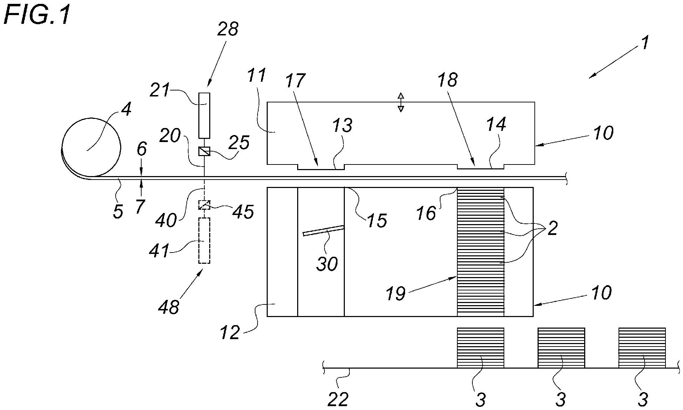

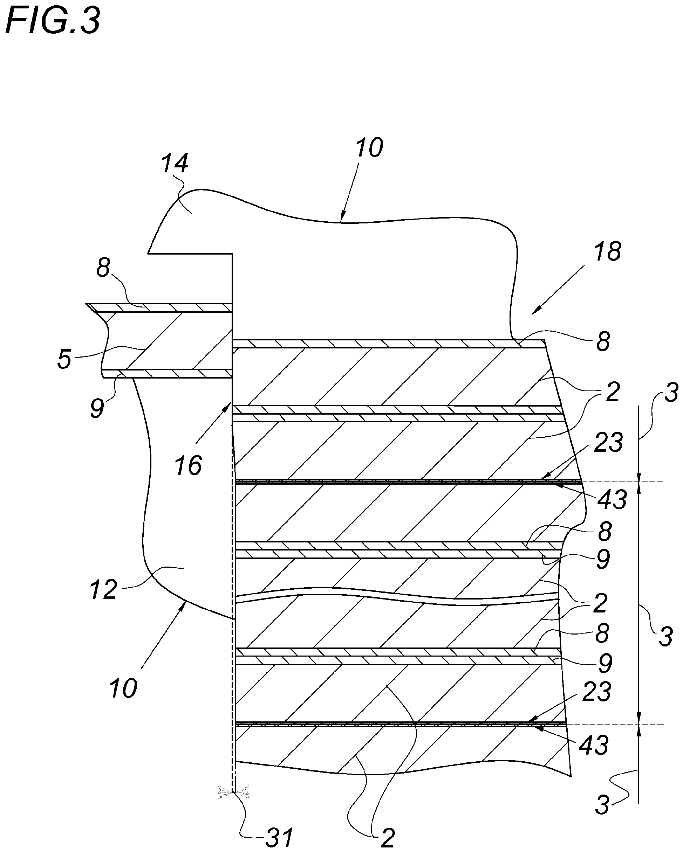

Gemäß dem Ausführungsbeispiel in Fig. 1 wird eine Vorrichtung 1 zur Durchführung des erfindungsgemäßen Verfahrens schematisch dargestellt. Diese Vorrichtung 1 dient zum Paketieren von freigestanzten Blechteilen 2 zu Blechpaketen 3. Hierzu wird von einem Coil 4 ein Elektroband 5 abgehaspelt, welches auf einer oder beiden seiner Fachseiten 6, 7 eine vollflächige Schmelzklebstoffschicht 8, 9, nämlich einen heißhärtenden Backlack, aufweist - welche Schmelzklebstoffschicht 8, 9 beispielsweise in der Fig. 3 zu erkennen ist.

Vom backlackbeschichteten Elektroband 5 werden mithilfe eines Folgestanzwerkzeugs 10 mehrere Blechteile 2 freigestanzt. Solch ein Freistanzten kann - im Allgemeinen erwähnt - ein Ausschneiden, Abschneiden, Ausklinken, Beschneiden, Zerteilen durch Ausdrücken etc. sein.

Wie außerdem der Fig. 1 zu entnehmen, führt das Stanzwerkzeug 10, beispielsweise hier ein Folgestanzwerkzeug 10, ein Schneiden mit mehren Hüben durch, indem sein Oberwerkzeug 11 mit seinem Unterwerkzeug 12 zusammenwirkt. Mit einer ersten Schneide 13 des Oberwerkzeugs 11 wird das Elektroband 5 für ein Freistanzen vorbearbeitet, wonach mit einer zweiten Schneide 14 des Oberwerkzeugs 11 aus dem Elektroband 5 das Blechteil 2 freigestanzt bzw. damit vereinzelt wird. Hierzu wirken die Schneiden 13, 14 mit den jeweiligen Matrizen 15, 16 des Unterwerkzeugs 12 zusammen und bilden damit im Stanzwerkzeug 10 zwei Stanzstufen 17, 18 aus.

Solch ein Folgeschneiden ist in der Fig. 1 daran zu erkennen, dass beim Vorbearbeiten ein Teil 30 vom Elektroband 5 abgetrennt wird, um das Elektroband 5 für das Freistanzen des Blechteils 2 vorzubereiten. Danach werden mithilfe der Stanzstufe 18 die Blechteile 2 freigestanzt und durch Druck des Oberwerkzeugs 11 in eine Stapeleinrichtung 19 gedrängt und dort gestapelt, die eine sich teilweise verjüngende Führung 31 im Unterwerkzeug 12 aufweist. Diese Führung 31 - siehe hierzu Fig. 3 - im Unterwerkzeug übt die Wirkung einer Paketbremse auf die Blechteile 2 aus, wodurch die Blechteile 2 unter Druck des Oberwerkzeugs 11 und mithilfe der zwischen den Blechteilen 2 vorhandenen Schmelzklebstoffschicht 8, 9 eine feste physikalische und/oder chemische Verbindung eingehen. Im Allgemeinen wird erwähnt, dass die Stapeleinrichtung 19 auch aktiv beheizt werden kann, um die stoffschlüssige Verbindung der Blechteile 2 zu verbessern.

Außerdem können die Blechpakete 3 nicht dargestellten weiteren Aushärtungsschritten unterworfen werden, um die stoffschlüssige Verbindung zwischen den Blechteilen 2 zu stärken. Des Weiteren besteht die Möglichkeit einer Drehung der Stapeleinrichtung 19, um beispielsweise segmentierte Blechpakete 3 aus Lagen mit mehreren nebeneinander angeordneten und übereinander gestapelten Blechteilen 2 auszubilden - was ebenfalls nicht dargestellt ist. Im Allgemeinen wird erwähnt, dass - nicht dargestellt - alternativ zur Verjüngung auch ein Gegenhalter in der Führung vorstellbar ist, der einen entsprechenden Gegendruck zum stoffschlüssigen Verbinden der Blechteile 2 ausübt.

Um die, die Stapeleinrichtung 19 verlassenden Blechpakete 3 leichter voneinander trennen zu können, wird zumindest eine Schmelzklebelackschicht 8, 9 bzw. werden beide Schmelzklebelackschichten 8, 9 an den Flachseiten 6, 7 am Elektroband 5 vor dem Freistanzen im Stanzwerkzeug 10 durch Laserlicht 20, 40, welches von zumindest einem vor dem Stanzwerkzeug 10 angeordneten Laser 21, 41 erzeugt wird, durch Abtragen in ihrer Schichtdicke 29, 49 verringert, sodass eine Trennung gestapelter Blechteile 2 in Blechpakete 3 ermöglicht wird - im Ausführungsbeispiel wird also lediglich ein Teil der Schichtdicke 29, 49 der Schmelzklebelackschichten 8, 9 entfernt.

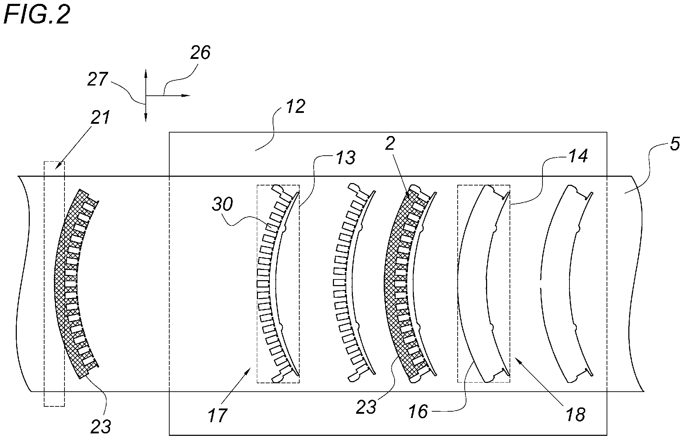

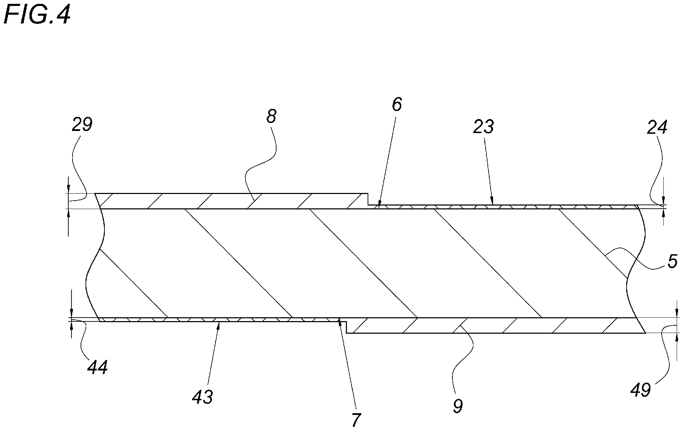

Durch die Wirkung des Laserlichts 20, 40 und dem partiellen Abtrag der Schmelzklebelackschicht 8, 9 wird ein Teilbereich 23, 43 am Blechteil 2 erzeugt - wie in Fig. 4 erkennbar. Dieser Teilbereich 23 wird dabei - siehe Fig. 2 - im Bereich des später freizustanzenden Blechteils 2 vorgesehen, sodass das Blechteil 2 später im Teilbereich 23 freigestanzt wird. Der abgetragene Teilbereich 23, 43 entspricht also jenem Bereich, aus welchem das Blechteil 2 freigestanzt wird.
Die entsprechende Genauigkeit kann durch das erfindungsgemäße Vorbereiten der Teilbereiche 23, 43 erreicht werden - es stellt nicht nur eine Verfahrensvereinvachung dar, es ermöglicht auch eine besonders genaue Trennung der an den Teilbereich 23, 43 anschließenden Blechteile 2. Dies kann insbesondere auch dann erreicht werden, wenn der durch Laserlicht 20, 40 erzeugte Teilbereich 23, 43 größer als das freizustanzende Blechteil 2 ist - was in den Figuren jedoch nicht dargestellt ist. Eine zuverlässige Teilung der gestapelten und stoffschlüssig verbundenen Blechteile 2 in präzise Blechpakete 3 ist damit möglich - insbesondere auch dort, wo die Blechteile 2 die Stapeleinrichtung 19 verlassen und diese beispielsweise zum Weitertransport auf einem Förderband 22 vorgesehen werden.

In den Fig. 3 und 4 wird ein Elektroband 5 gezeigt, welches an beiden seiner Flachseiten 6, 7 jeweils mit einer Schmelzklebelackschicht 8, 9 beschichtet ist. Es ist jedoch möglich, dass die Schmelzklebelackschicht 8, 9 nur an einer Flachseite 6, 7 des Elektrobands 5 vorgesehen ist und der erzeugte Teilbereich 23, 43 ebenso an dieser Flachseite 6, 7 durch Abtrag der Schmelzklebelackschicht 8, 9 vorgesehen wird. Der beidseitige Abtrag der Schmelzklebelackschicht 8, 9 - wie in Fig. 4 gezeigt - erfolgt dabei vorzugsweise derart, dass die Teilbereiche 23, 43 in Vorschubrichtung 26 des Elektrobands 5 zueinander versetzt angeordnet sind. Die Blechteile 2 werden nach dem Freistanzen in der Stapeleinrichtung 19 mit ihren Teilbereichen 23, 43 einander zugewandt gestapelt - wodurch eine besonders einfache spätere Trennung in Blechpakete 3 erfolgen kann. Letzteres kann der Fig. 3 entnommen werden.

Im Ausführungsbeispiel wird die Schmelzklebelackschicht 8, 9 am Elektroband 5 nur teilweise abgetragen, insbesondere nämlich bis zum Verbleib einer Restschichtdicke 24, 44, und damit der Teilbereich 23, 43 erzeugt - was insbesondere der Fig. 4 entnommen werden kann. Die Restschichtdicke 24, 44 beträgt vorzugsweise 1 µm, insbesondere 1,5 µm, da bei dieser Restschichtdicke 24, 44 gewährleistet werden kann, dass die Schmelzklebelackschicht 8, 9 an keiner Stelle bis zum Elektroband 5 abgetragen wird - was das Blechteil 2 gegenüber äußeren Einflüssen, insbesondere gegenüber Korrosion, exponieren würde und somit die Lebensdauer des Blechpakets 3 stark vermindern würde. Durch die Wirkung von Laserlicht 20, 40 wird die Schmelzklebelackschicht 8, 9 sowohl abgetragen als auch thermisch aktiviert, wodurch diese in ihrem Klebevermögen deaktiviert wird. Dadurch können die Trennung der Blechteile 2 in Blechpakete 3 weiter vereinfacht und das Verfahren noch zuverlässiger gestaltet werden.

Der Laser 21, 41 weist zudem eine Ablenkeinrichtung 25, 45 auf, die den Laser 21, 41 in Querrichtung 27 zur Vorschubrichtung 26 des Elektrobands 5 über die gesamte Breite des Elektrobands 5 ablenkt. Dadurch kann zusammen mit dem Vorschub des Elektrobands 5 ein zuverlässiger und schneller Abtrag der Schmelzklebelackschicht 8, 9 in allen Richtungen des Elektrobands 5 erfolgen. Ein solcher Aufbau kann zudem konstruktiv besonders einfach realisiert werden. Der Laser 21, 41 kann dabei insbesondere in einer oszillierenden Bewegung über die Breite des Elektrobands 5 durch die Ablenkeinrichtung 25, 45 bewegt werden, um die Schmelzklebelackschicht 8, 9 teilweise - vorzugsweise bis zur Restschichtdicke 24, 44 - abzutragen. Bei Elektrobändern 5, die an beiden ihrer Flachseiten 6, 7 mit einer Schmelzklebelackschicht 8, 9 beschichtet sind, wird bevorzugterweise jeweils zumindest ein Laser 21, 41 an jeder Flachseite 6, 7 des Elektrobands 5 vorgesehen - wie in Fig. 1 erkennbar. Es ist somit möglich, dass der Abtrag der Schmelzklebelackschichten 8, 9 also für jede Flachseite 6, 7 unabhängig und damit simultan erfolgt - was das Verfahren deutlich beschleunigt.

## Patentansprüche

1. Verfahren zum Verbinden von Blechteilen (2) zu einem Blechpaket (3), bei dem Blechteile (2) von einem, an zumindest einer seiner Flachseiten (6, 7) mit einer Schmelzklebelackschicht (8, 9) beschichtetem Elektroband (5) freigestanzt werden, die freigestanzten Blechteile (2) gestapelt und zu mehreren Blechpaketen (3) durch thermische Aktivierung der Schmelzklebelackschicht (8, 9) stoffschlüssig verbunden werden, wobei vor dem Freistanzen der Blechteile (2) das Elektroband (5) in einem Teilbereich (23, 43) der Schmelzklebelackschicht (8, 9) derart vorbereitet wird, dass nach einem Freistanzen des Blechteils (2), aufweisend diesen vorbereiteten Teilbereich (23, 43), dieses Blechteil (2) die Trennung der gestapelten Blechteile (2) in Blechpakete (3) erleichtert, **dadurch gekennzeichnet, dass** bei der Vorbereitung des Elektrobands (5) die Schmelzklebelackschicht (8, 9) am Elektroband (5) in ihrer Schichtdicke (29, 49) durch Abtragen mit Laserlicht (20, 40) zumindest verringert wird, um den Teilbereich (23, 43) zu erzeugen.

2. Verfahren nach Anspruch 1, **dadurch gekennzeichnet, dass** im Teilbereich (23, 43) die Schmelzklebelackschicht (8, 9) bis zu einer Restschichtdicke (24, 44) abgetragen wird.

3. Verfahren nach Anspruch 2, **dadurch gekennzeichnet, dass** die Schmelzklebelackschicht (8, 9) bis zu einer Restschichtdicke (24, 44) von zumindest 1 µm, insbesondere von zumindest 1,5 µm, abgetragen wird.

4. Verfahren nach Anspruch 1, 2 oder 3, **dadurch gekennzeichnet, dass** im Teilbereich (23, 43) die Schmelzklebelackschicht (8, 9) durch Laserlicht (20, 40) thermisch aktiviert wird.

5. Verfahren nach einem der Ansprüche 1 bis 4, **dadurch gekennzeichnet, dass** die Schmelzklebelackschichten (8, 9) des an beiden gegenüberliegenden Flachseiten (6. 7) jeweils mit einer Schmelzklebelackschicht (8, 9) beschichteten Elektrobands (5) mit Laserlicht (20, 40) zumindest teilweise in ihrer jeweiligen Schichtdicke (29, 49) abgetragen werden, um Teilbereiche (23, 43) an der unteren und oberen Flachseite (6, 7) des Elektrobands (5) zu erzeugen.

6. Verfahren nach Anspruch 5, **dadurch gekennzeichnet, dass** die unteren Teilbereiche (23, 43) in Vorschubrichtung (26) des Elektrobands (5) gegenüber den oberen Teilbereichen (23, 43) der Flachseite (6, 7) des Elektrobands (5) versetzt angeordnet sind.

7. Verfahren nach einem der Ansprüche 1 bis 6, **dadurch gekennzeichnet, dass** die Blechteile (2) aus dem Elektroband (5) folgegestanzt werden.

8. Verfahren nach einem der Ansprüche 1 bis 7, **dadurch gekennzeichnet, dass** das Blechteil (2) im abgetragenen Teilbereich (23, 43) der Schmelzklebelackschicht (8, 9) freigestanzt wird.

9. Verfahren nach einem der Ansprüche 1 bis 8, **dadurch gekennzeichnet, dass** das Laserlicht (20), insbesondere oszillierend, in Querrichtung (27) zur Vorschubrichtung (26) des Elektrobands abgelenkt wird.

10. Vorrichtung zum Verbinden von Blechteilen (2) zu einem Blechpaket (3) mit einem Stanzwerkzeug (10), das eine Stanzstufe (18) zum Freistanzen eines Blechteils (2) von einem, an zumindest einer seiner Flachseiten (6, 7) mit einem Schmelzklebelackschicht (8, 9) beschichteten Elektroband (5) aufweist, mit einer Stapeleinrichtung (19) zum Stapeln und zumindest durch thermische Aktivierung des Schmelzklebelacks (8) stoffschlüssigen Verbinden der freigestanzten Blechteile (2) zu mehreren Blechpaketen (3), und mit einer Einrichtung (28) vor der Stanzstufe (10) zum Freistanzen eines Blechteils (2), welche Einrichtung ausgebildet ist, das Elektroband (5) in einem Teilbereich (23, 43) der Schmelzklebelackschicht (8) derart vorzubereiten, dass sich nach einem Freistanzen des Blechteils (2) mit diesem vorbereiteten Teilbereich (23, 43) die Trennung der gestapelten Blechteile (2) in Blechpakete (3) erleichtert, **dadurch gekennzeichnet, dass** die Einrichtung (28) vor der Stanzstufe (10) zumindest einen Laser (21) mit einer Ablenkeinrichtung (25) zur zumindest Verringerung der Schichtdicke (29, 49) der Schmelzklebelackschicht (8, 9) im Teilbereich (23, 43) durch Abtragen mit Laserlicht (20, 40) des Lasers (21) aufweist.
